# EUROPEAN PATENT SPECIFICATION

(11) **EP 2 587 581 B1**
(45) Date of publication and mention of the grant of the patent: **05.12.2018**
(21) Application number: 11798053.2
(22) Date of filing: 17.06.2011
(51) Int. Cl.: H01M 10/0569, H01M 4/505, H01M 4/525, H01M 10/0525, H01M 10/0567

(54) **LITHIUM ION SECONDARY BATTERY**
LITHIUMIONENSEKUNDÄRBATTERIE
BATTERIE SECONDAIRE AU LITHIUM-ION

(30) Priority: 25.06.2010 JP 2010144957
(43) Date of publication of application: 01.05.2013
(73) Proprietor: NEC Energy Devices, Ltd., Chuo-ku Sagamihara-shi Kanagawa 252-5298 (JP)
(72) Inventor: SASAKI, Hideaki, Sagamihara-shi Kanagawa 252-5298 (JP); NOGUCHI, Takehiro, Sagamihara-shi Kanagawa 252-5298 (JP); KANEKO, Shinako, Sagamihara-shi Kanagawa 252-5298 (JP)
(74) Representative: Vossius & Partner Patentanwälte Rechtsanwälte mbB
(86) International application number: PCT/JP2011/063869
(87) International publication number: WO 2011/162169

(56) References cited:
- EP-A1- 2 485 316
- WO-A1-2009/035085
- JP-A- 7 249 432
- JP-A- 2004 087 136
- JP-A- 2007 103 141
- JP-A- 2007 280 943
- JP-A- 2008 176 987
- JP-A- 2008 198 524
- JP-A- 2008 218 387
- JP-A- 2008 269 982
- JP-A- 2009 059 711
- US-A1- 2010 099 031

## Description

### Technical Field

The exemplary embodiment relates to a lithium ion secondary battery having a high energy density and excellent in high temperature cycle characteristics.

### Background Art

A lithium ion secondary battery has a smaller volume and a higher weight capacity density than those of related secondary batteries such as an alkaline storage battery, and the lithium ion secondary battery can produce high voltage. Therefore, a lithium ion secondary battery is widely employed as a power source for small equipment and is widely used as a power source for mobile devices such as a cellular phone and a notebook personal computer. In recent years, applications to a large-sized battery, which has a large capacity and for which a long life is required, for example, for an electric vehicle (EV) and a power storage field, are expected with the rise of consciousness to the concerns to environmental problems and energy saving besides the small-sized mobile device applications.

At present, in commercially available lithium ion secondary batteries, there is used a material based on LiMO₂ (M represents at least one of Co, Ni, and Mn) including a layer structure or LiMn₂O₄ including a Spinel structure and a material in which a part of Mn in LiMn₂O₄ is replaced by Ni or the like, as a positive electrode active material.

However, a solvent component of an electrolyte solution is liable to be oxidatively decomposed as the potential of the positive electrode increases, and particularly in a high-temperature environment of 40°C or more, a large amount of gas may be generated to disable the battery operation.

In order to solve such a problem, Patent Literature 1 discloses a method of using an electrolyte solvent which contains a cyclic carbonate such as propylene carbonate (PC) and ethylene carbonate (EC) in an amount of 50% by volume or more, and contains a common linear organic solvent such as dimethyl carbonate (DMC) and diethyl carbonate (DEC) and a fluorine-containing linear organic solvent such as a fluorinated ether, a fluorinated acrylate and a fluorinated ester.

US 2010/099031 A1 relates to a nonaqueous electrolyte comprising a nonaqueous solvent and an electrolyte dissolved therein, wherein the nonaqueous electrolyte comprises a monofluorophosphate and/or a difluorophosphate and further comprises an iron-group element.

### Summary of Invention

### Technical Problem To Be Solved By Invention

However, when a cyclic carbonate is contained in an amount of 50% by volume or more as disclosed in JP2003-100342A (Patent Literature 1), the viscosity of the solvent becomes high, and if a fluorinated ether is used as a sub solvent, the ion conductivity of the electrolyte solution becomes reduced, thereby causing a problem of reducing rate characteristics.

The technical problem of the exemplary embodiment is to provide a lithium ion secondary battery using a positive electrode active material and a nonaqueous electrolyte solution containing a fluorinated ether, wherein the lithium ion secondary battery is excellent in rate characteristics and high temperature cycle characteristics.

### Means For Solving Problem

The lithium ion secondary battery according to the exemplary embodiment comprises a positive electrode active material capable of absorbing and desorbing lithium, a negative electrode active material capable of absorbing and desorbing lithium, and a nonaqueous electrolyte solution containing a fluorinated ether represented by the following formula (1),
wherein the lithium ion secondary battery meets
the requirement [1]: the following formulae (a) to (c) are satisfied, wherein A (µm) represents the average particle size of the positive electrode active material; and B (vol.%) represents the volume concentration of the fluorinated ether in the nonaqueous electrolyte solution;
or the lithium ion secondary battery meets
the requirement [2]: the following formulae of (b), (d), and (e) are satisfied, wherein B (vol.%) represents the volume concentration of the fluorinated ether in the nonaqueous electrolyte solution; and C (m²/g) represents the specific surface area of the positive electrode active material:

R₁-O-R₂ (1)

(wherein in the formula (1), R₁ and R₂ are each independently selected from a fluorinated alkyl group having 1 to 9 carbon atoms or an alkyl group having 1 to 9 carbon atoms; at least one of R₁ and R₂ is a fluorinated alkyl group having 1 to 9 carbon atoms; and the sum of number of the carbon atoms of R₁ and R₂ is 10 or less),
(a) 5 ≤ A ≤ 25,
(b) 10 ≤ B ≤ 60,
(c) 40 ≤ 2A + B ≤ 90,
(d) 0.2 ≤ C ≤ 1.2, and
(e) -80 ≤ 200C - 3B ≤ 150.

### Advantageous Effects of Invention

The exemplary embodiment can provide a lithium ion secondary battery using a positive electrode active material and a nonaqueous electrolyte solution containing a fluorinated ether, wherein the lithium ion secondary battery is excellent in rate characteristics and high temperature cycle characteristics.

### Brief Description of Drawings

Figure 1 is a view of the requirements of Examples 1 to 9 and Comparative Examples 1 to 5 plotted on the A-B coordinate plane.
Figure 2 is a view of the requirements of Examples 1 to 9 and Comparative Examples 1 to 5 plotted on the C-B coordinate plane.

### Description of Embodiments

Hereinafter, the exemplary embodiment will be described.

### (Battery Construction)

The lithium ion secondary battery according to the exemplary embodiment has a construction in which a positive electrode and a negative electrode are oppositely arranged via a separator, and they are sealed with an outer packaging body in the state where they contain a nonaqueous electrolyte solution, the positive electrode being obtained by forming a positive electrode active material layer containing a positive electrode active material capable of absorbing and desorbing lithium on a positive electrode current collector, and the negative electrode being obtained by forming a negative electrode active material layer containing a negative electrode active material capable of absorbing and desorbing lithium on a negative electrode current collector.

### (Nonaqueous electrolyte solution)

A nonaqueous solvent in which an electrolyte comprising a lithium salt is dissolved can be used as a nonaqueous electrolyte solution. Examples of the lithium salt include a lithium imide salt, LiPF₆, LiAsF₆, LiAlCl₄, LiClO₄, LiBF₄, and LiSbF₆. Among these, LiPF₆ and LiBF₄ are preferred. Examples of the lithium imide salt include LiN(CₖF₂ₖ₊₁SO₂) (CₘF₂ₘ₊₁SO₂) (wherein k and m are each independently 1 or 2). The lithium salt may be used alone or may also be used in combination of two or more thereof.

As the nonaqueous solvent, it is possible to use at least one organic solvent selected from among cyclic carbonates, linear carbonates, aliphatic carboxylates, γ-lactones, cyclic ethers, and linear ethers. Examples of the cyclic carbonates include propylene carbonate (PC), ethylene carbonate (EC), butylene carbonate (BC), and derivatives thereof (including fluorinated compounds). Generally, since cyclic carbonate has high viscosity, a linear carbonate is mixed for use in order to reduce the viscosity. Examples of the linear carbonates include dimethyl carbonate (DMC), diethyl carbonate (DEC), ethyl methyl carbonate (EMC), dipropyl carbonate (DPC), and derivatives thereof (including fluorinated compounds). Examples of the aliphatic carboxylates include methyl formate, methyl acetate, ethyl propionate, and derivatives thereof (including fluorinated compounds). Examples of the γ-lactones include γ-butyrolactone and derivatives thereof (including fluorinated compounds). Examples of the cyclic ethers include tetrahydrofuran, 2-methyltetrahydrofuran, and derivatives thereof (including fluorinated compounds). Examples of the linear ethers include 1, 2-diethoxyethane (DEE), ethoxymethoxyethane (EME), diethyl ether, and derivatives thereof (including fluorinated compounds). As examples of other nonaqueous solvents, it is also possible to use dimethyl sulfoxide, formamide, acetamide, dimethylformamide, dioxolane, acetonitrile, propionitrile, nitromethane, ethyl monoglyme, phosphotriester, trimethoxymethane, sulfolane, methyl sulfolane, 1,3-dimethyl-2-imidazolidinone, 3-methyl-2-oxazolidinone, 1,3-propane sultone, anisole, N-methyl pyrrolidone, and derivatives thereof (including fluorinated compounds).

In the exemplary embodiment, a fluorinated ether represented by following formula (1) and other nonaqueous solvents are used in combination as a nonaqueous solvent. Since the reactivity of a positive electrode active material is high, a fluorinated ether considered to have a higher oxidation resistance than a carbonate generally used as a nonaqueous solvent is used, thereby achieving improvement in the cycle characteristics of the resulting lithium ion secondary battery. Since a positive electrode active material having a charge and discharge region at 4.5 V or more to lithium metal (5 V class positive electrode active material) has higher reactivity, the effect of improving the cycle characteristics appears more significantly when this positive electrode active material is used.

R₁-O-R₂ (1)

In the formula (1), R₁ and R₂ are each independently selected from a fluorinated alkyl group having 1 to 9 carbon atoms or an alkyl group having 1 to 9 carbon atoms, and at least one of R₁ and R₂ is a fluorinated alkyl group having 1 to 9 carbon atoms. In particular, in terms of a dielectric constant and viscosity, an unsymmetrical fluorinated ether in which number of carbon atoms of one of R₁ and R₂ is preferably 3 or more and 8 or less, and number of carbon atoms of the other of R₁ and R₂ is preferably 1 or more and 2 or less. R₁ and R₂ may be linear or branched. Further, R₁ and R₂ may be a fluorinated alkyl in which a part of hydrogen atom in an alkyl group is replaced by fluorine atom or may be a perfluorinated alkyl in which all the hydrogen atom in an alkyl group is replaced by fluorine atom. The sum of number of the carbon atoms of R₁ and R₂ is 10 or less, but it is preferably 3 or more and 10 or less, more preferably 3 or more and 8 or less, in terms of ion conductivity and compatibility with other solvents. Furthermore, the fluorination ratio (the percentage in which the hydrogen atoms in an alkyl group are replaced by fluorine atoms, that is, the percentage of fluorine atoms to the sum total of the hydrogen atoms and fluorine atoms contained in the fluorinated ether represented by the above formula (1)) is preferably 20% or more and 100% or less in terms of oxidation resistance, more preferably 35% or more and 90% or less in terms of the balance between oxidation resistance and compatibility with other solvents.

Examples of the fluorinated ether represented by the above formula (1) include CF₃OCH₃, CF₃OC₂H₅, F(CF₂)₂OCH₃, F(CF₂)₂OC₂H₅, F(CF₂)₃OCH₃, F(CF₂)₃OC₂H₅, F(CF₂)₄OCH₃, F(CF₂)₄OC₂H₅, F(CF₂)₅OCH₃, F(CF₂)₅OC₂H₅, F(CF₂)₆OCH₃, F(CF₂)₆OC₂H₅, F(CF₂)₇OCH₃, F(CF₂)₇OC₂H₅, F(CF₂)₈OCH₃, F(CF₂)₈OC₂H₅, F(CF₂)₉OCH₃, CF₃CH₂OCH₃, CF₃CH₂OCHF₂, CF₃CF₂CH₂OCH₃, CF₃CF₂CH₂OCHF₂, CF₃CF₂CH₂O(CF₂)₂H, HCF₂CH₂OCH₃, H(CF₂)₂OCH₂CH₃, H(CF₂)₂OCH₂CF₃, H(CF₂)₂CH₂OCHF₂, H(CF₂)₂CH₂O(CF₂)₂H, (CF₃)₂CHOCH₃, (CF₃)₂CHCF₂OCH₃, CF₃CHFCF₂OCH₃, CF₃CHFCF₂OCH₂CH₃, and CF₃CHFCF₂CH₂OCHF₂. The fluorinated ether represented by the above formula (1) may be used alone or may also be used in combination of two or more thereof.

The nonaqueous solvent used in combination with the fluorinated ether represented by the above formula (1) preferably contains a cyclic carbonate, and more preferably contains a linear carbonate in terms of reducing the viscosity of a nonaqueous electrolyte solution. In this case, the volume ratio of the cyclic carbonate to the linear carbonate is preferably 1:0.56 to 1:6, more preferably 1:0.56 to 1:1 particularly in terms of a capacity retention rate. If the volume ratio of the cyclic carbonate is low, the quality of an SEI film formed on a negative electrode surface at the time of initial charging may be reduced to cause reduction in cycle characteristics, and if the volume ratio of the cyclic carbonate is high, the viscosity of the nonaqueous electrolyte solution may be increased to cause reduction in rate characteristics. The nonaqueous solvent used in combination with the fluorinated ether represented by the above formula (1) may be used alone or may also be used in combination of two or more thereof.

The volume concentration B (vol.%) of the fluorinated ether represented by the above formula (1) in the nonaqueous solvent is selected from 10 to 60 vol.%. If the volume concentration of the fluorinated ether represented by the above formula (1) in the nonaqueous solvent is low, the oxidation resistance of the nonaqueous electrolyte solution is insufficient, and if the volume concentration of the fluorinated ether represented by the above formula (1) in the nonaqueous solvent is high, the ion conductivity of the nonaqueous electrolyte solution decreases to reduce rate characteristics. The volume concentration B (vol.%) of the fluorinated ether represented by the above formula (1) in the nonaqueous solvent is more preferably 20 to 50 vol.%.

### (Positive electrode active material)

A material having a charge and discharge region at 4.2 V (vs. Li/Li⁺) or less to lithium metal (4 V class positive electrode active material) such as LiCO₂, LiNiO₂, and LiMn₂O₄ can be used as a positive electrode active material. Further, a particulate material having a charge and discharge region at 4.5 V (vs. Li/Li⁺) or more to lithium metal can be used. For example, a lithium manganese composite oxide represented by the following formula (2) can be used.

Liₐ(MₓMn_{2-x-y}Y_{y})(O_{4-w}Z_{w}) (2)

In the formula (2), 0.5 ≤ x ≤ 1.2, 0 ≤ y, x + y < 2, 0 ≤ a ≤ 1.2, and 0 ≤ w ≤ 1; M is at least one selected from the group consisting of Co, Ni, Fe, Cr, and Cu; Y is at least one selected from the group consisting of Li, B, Na, Mg, Al, Ti, Si, K, and Ca; and Z is at least one of F and Cl. Among them, it is preferred to use a positive electrode active material having a charge and discharge region at 4.5 V or more to lithium metal from the point that the effect of the present invention appears more significantly.

The average particle size A (µm) of the positive electrode active material is preferably 5 to 25 µm. A small average particle size of the positive electrode active material reduces the diffusion length of lithium in a particle to thereby improving rate characteristics, but on the other hand, the contact area with the nonaqueous electrolyte solution increases, thereby increasing the generation of gas resulting from the reaction of the positive electrode active material with the nonaqueous electrolyte solution or increasing the elution volume of Mn in the positive electrode to increase the cell resistance, which is liable to cause reduction in cycle characteristics. On the other hand, a large average particle size of the positive electrode active material can suppress the reaction of the positive electrode active material with the nonaqueous electrolyte solution, but is liable to cause reduction in rate characteristics. The average particle size A (µm) of the positive electrode active material is more preferably 10 to 20 µm. The average particle size A (µm) of the positive electrode active material can be measured by a laser diffraction and scattering method (micro-track method).

The specific surface area C (m²/g) of the positive electrode active material is preferably 0.2 to 1.2 m²/g. A small specific surface area of the positive electrode active material improves high temperature cycle characteristics, but reduces rate characteristics because the reaction surface area reduces. On the other hand, a large specific surface area of the positive electrode active material improves rate characteristics, but reduces high temperature cycle characteristics. The specific surface area C (m²/g) of the positive electrode active material is more preferably 0.4 to 1.0 m²/g. The specific surface area C (m²/g) of the positive electrode active material can be measured by a BET method.

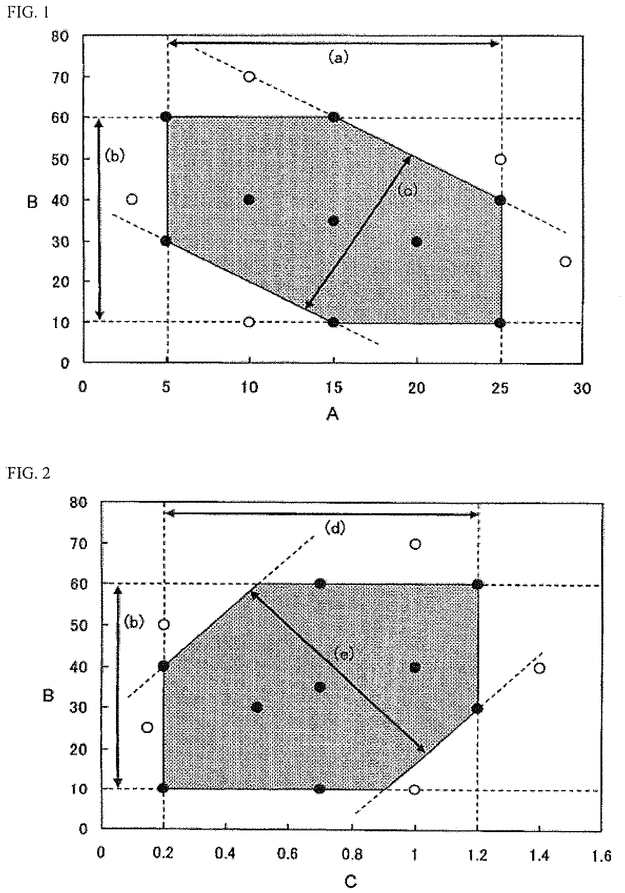

The greater importance is placed on either rate characteristics or life depending on the application of a battery. Therefore, depending on the characteristics to be thought as important, the specific surface area and the volume concentration of a fluorinated ether in the nonaqueous electrolyte solution can be adjusted to a more suitable numerical value range within the scope of the exemplary embodiment. For example, with respect to a large-sized battery for an electric vehicle, electricity storage applications, and the like, greater importance is placed on life rather than rate characteristics in many cases. In this case, it is preferred to adjust to the region where the specific surface area is small and a fluorinated ether concentration is high, that is, the region at the upper left of Figure 2. Specifically, the specific surface area of the positive electrode active material is preferably 0.3 to 0.6 m²/g, and the fluorinated ether concentration is preferably 30 to 50 vol.%. Further, the particle size basically tends to be increased as the specific surface area of the positive electrode active material reduces, but this tendency may not necessarily be applied, depending on the particle shape and the surface state of the positive electrode active material. In such a case, it is preferred to adopt a value of the specific surface area that has a stronger influence on battery performance.

However, in the exemplary embodiment, it is necessary to satisfy the following requirement [1] or requirement [2]. Under these requirements, a lithium ion secondary battery excellent in both high temperature cycle characteristics and rate characteristics can be obtained by suppressing the oxidative decomposition of the nonaqueous electrolyte solution in the positive electrode and sufficiently ensuring the movement of lithium ions in the positive electrode active material and the nonaqueous electrolyte solution.

### <Requirement [1]>

The average particle size A (µm) of the positive electrode active material and the volume concentration B (vol.%) of the fluorinated ether represented by the above formula (1) in the nonaqueous electrolyte solution satisfy the following formulae (a) to (c):

(a) 5 ≤ A ≤ 25,
(b) 10 ≤ B ≤ 60, and
(c) 40 ≤ 2A + B ≤ 90.

In the requirement [1], if the average particle size A of the positive electrode active material is smaller than the lower limit of the formula (a), the surface reactivity is increased to enhance cycle degradation, and on the other hand, if it is larger than the upper limit, the diffusion of lithium ions in a solid becomes slow to reduce rate characteristics. Further, if the volume concentration B of the fluorinated ether is lower than the lower limit of the formula (b), the oxidation resistance of the nonaqueous electrolyte solution is insufficient to enhance cycle degradation, and on the other hand, if it is higher than the upper limit, the ion conductivity of the nonaqueous electrolyte solution becomes low to reduce rate characteristics. Therefore, it is necessary to satisfy the formula (a) and the formula (b). However, since the battery characteristics are affected by the combined influence of both the positive electrode active material and the nonaqueous electrolyte solution, the requirement of satisfying the formula (a) and the formula (b) is insufficient, particularly when a high voltage positive electrode is used in which decomposition of the nonaqueous electrolyte solution easily occurs. That is, furthermore, by satisfying the formula (c), as shown in Figure 1 (a range represented by a hexagon), a region where the average particle size A of the positive electrode active material is small and the volume concentration B of the fluorinated ether is low (a region which has high rate characteristics but is poor in high temperature cycle characteristics) and a region where the average particle size A of the positive electrode active material is large and the volume concentration B of the fluorinated ether is high (a region which has elevated high temperature cycle characteristics but is poor in rate characteristics) are excluded. Thus, a lithium ion secondary battery excellent in both cycle characteristics and rate characteristics can be obtained by satisfying the requirement [1].

### <Requirement [2]>

The lithium ion secondary battery satisfies the following formulae (b), (d), and (e), wherein B (vol.%) represents the volume concentration of the fluorinated ether represented by the above formula (1) in the nonaqueous electrolyte solution; and C (m²/g) represents the specific surface area of the positive electrode active material:

(b) 10 ≤ B ≤ 60,
(d) 0.2 ≤ C ≤ 1.2, and
(e) -80 ≤ 200C - 3B ≤ 150.

In the requirement [2], as described above, if the volume concentration B of fluorinated ether is lower than the lower limit of the formula (b), cycle degradation is enhanced, and on the other hand, if it is higher than the upper limit, rate characteristics is reduced. Further, if the specific surface area C of the positive electrode active material is larger than the upper limit of the formula (d), the surface reactivity is increased, thereby enhancing cycle degradation, and on the other hand, if it is smaller than the lower limit, the surface diffusion path of lithium ions reduces, thereby reducing rate characteristics. Therefore, it is necessary to satisfy the formula (b) and the formula (d). However, since the battery characteristics are affected by the combined influence of both the positive electrode active material and the nonaqueous electrolyte solution, the requirement of satisfying the formula (b) and the formula (d) is insufficient, particularly when a high voltage positive electrode is used in which decomposition of the nonaqueous electrolyte solution easily occurs. That is, furthermore, by satisfying the formula (e), as shown in Figure 2 (a range represented by a hexagon), a region where the specific surface area C of the positive electrode active material is large and the volume concentration B of the fluorinated ether is low (a region which has high rate characteristics but is poor in high temperature cycle characteristics) and a region where the specific surface area C of the positive electrode active material is small and the volume concentration B of the fluorinated ether is high (a region which has elevated high temperature cycle characteristics but is poor in rate characteristics) are excluded. Thus, a lithium ion secondary battery excellent in both cycle characteristics and rate characteristics can be obtained by satisfying the requirement [2].

### (Negative electrode active material)

Carbon materials such as graphite and amorphous carbon can be used as a negative electrode active material; and graphite is preferably used in terms of energy density. The negative electrode active material may also include materials which form alloys with Li such as Si, Sn, or Al, Si oxides, Si composite oxides containing Si and other metal elements other than Si, Sn oxides, Sn composite oxides containing Sn and other metal elements other than Sn, Li₄Ti₅O₁₂, and composite materials in which these materials are covered with carbon. The negative electrode active material may be used alone or may be used in combination of two or more thereof.

### (Electrode)

The positive electrode includes a positive electrode active material layer formed on at least one surface of a positive electrode current collector, and the positive electrode active material layer generally comprises a positive electrode active material which is the main material, a binder, and a conductive aid. The negative electrode includes a negative electrode active material layer formed on at least one surface of a negative electrode current collector, and the negative active material layer generally comprises a negative electrode active material which is the main material, a binder, and a conductive aid.

Examples of the binder used in the positive electrode include polyvinylidene fluoride (PVDF) and an acrylic polymer. Examples of the binder used in the negative electrode include a styrene-butadiene rubber (SBR) in addition to the above materials. When an aqueous binder such as an SBR emulsion is used, a thickener such as carboxymethyl cellulose (CMC) can also be used.

Carbon materials such as carbon black, granular graphite, flake graphite, and carbon fiber can be used as the conductive aid for both the positive electrode and the negative electrode. In particular, it is preferred to use carbon black having low crystallinity in the positive electrode.

As the positive electrode current collector, aluminum, stainless steel, nickel, titanium, or alloys thereof can be used. As the negative electrode current collector, copper, stainless steel, nickel, titanium, or alloys thereof can be used.

The electrode can be obtained by dispersing and kneading an active material, a binder, and a conductive aid in a solvent such as N-methyl-2-pyrrolidone (NMP) in a predetermined blending amount to prepare a slurry and applying the resultant slurry to the current collector to form the active material layer. The obtained electrode can also be compressed by a method such as a roll press to be adjusted to a suitable density.

### (Separator)

As a separator, a porous film made of polyolefin such as polypropylene and polyethylene, a fluororesin, and the like is used.

### (Outer packaging body)

As an outer packaging body, a can such as a coin type can, a square type can, and a cylinder type can, and a laminated outer packaging body can be used; and a laminated outer packaging body prepared by using a flexible film made of a laminate of a synthetic resin and metal foil is preferred in terms of allowing reduction in weight and achieving an improvement in battery energy density. Since the laminate type battery is also excellent in heat dissipation, it is suitably used as a battery for vehicles such as an electric vehicle.

### Examples

Examples of the exemplary embodiment will be described in detail below, but the exemplary embodiment is not limited only to the following examples.

### (Example 1)

### (Preparation of Negative Electrode)

A negative electrode slurry was prepared by uniformly dispersing, in NMP, graphite powder (average particle size (D₅₀): 20 µm, specific surface area: 1.5 m²/g) as a negative electrode active material and PVDF as a binder in a weight ratio of 95:5. The negative electrode slurry was applied to copper foil having a thickness of 15 µm used as a negative electrode current collector, followed by drying at 125°C for 10 minutes to allow NMP to evaporate, thereby forming a negative electrode active material layer. Further, the negative electrode active material layer was then pressed to prepare a negative electrode. The weight of the negative electrode active material layer per unit area after drying was set to 0.008 g/cm².

### (Preparation of Positive Electrode)

A positive electrode slurry was prepared by uniformly dispersing, in NMP, LiNi_{0.5}Mn_{1.5}O₄ powder (average particle size (D₅₀): 5 µm, specific surface area: 1.2 m²/g) as a positive electrode active material, PVDF as a binder, and carbon black as a conductive aid, in a weight ratio of 92:4:4. The positive electrode slurry was applied to aluminum foil having a thickness of 20 µm used as a positive electrode current collector, followed by drying at 125°C for 10 minutes to allow NMP to evaporate, thereby preparing a positive electrode. The weight of the positive electrode active material layer per unit area after drying was set to 0.025 g/cm².

### (Nonaqueous Electrolyte Solution)

In a nonaqueous solvent in which a fluorinated ether (FE) represented by H(CF₂)₂CH₂O(CF₂)₂H, EC, and DMC are mixed in a ratio of FE:EC:DMC = 30:20:50 (volume %), 1 mol/L of LiPF₆ was dissolved as an electrolyte, and thereto 2.5 mass% of vinylene carbonate (VC) was mixed as an additive. The resulting solution was used as a nonaqueous electrolyte solution.

### (Preparation of Laminate Type Battery)

The positive electrode and the negative electrode prepared as described above were respectively cut into a size of 5 cm × 6.0 cm, in which a portion of 5 cm × 1 cm in size on an edge was a portion where the electrode active material layer was not formed (uncoated portion) for connecting a tab, and a portion where the electrode active material layer was formed had a size of 5 cm × 5 cm. A positive electrode tab made of aluminum having a size of 5 mm in width × 3 cm in length × 0.1 mm in thickness was ultrasonically welded to the uncoated portion of the positive electrode by 1 cm in length. Similarly, a negative electrode tab made of nickel having the same size as the positive electrode tab was ultrasonically welded to the uncoated portion of the negative electrode. The above negative electrode and positive electrode were arranged on both sides of a separator comprising polyethylene and polypropylene and having a size of 6 cm × 6 cm so that the electrode active material layers overlap with each other with the separator in between, thereby obtaining an electrode laminate. Three edges of two aluminum laminate films each having a size of 7 cm × 10 cm were heat-sealed except one of the longer edges thereof to adhere the three edges by a width of 5 mm, thereby preparing a bag-shaped laminated outer packaging body. The above electrode laminate was inserted into the laminated outer packaging body so that the electrode laminate is positioned 1 cm away from one of the shorter edges of the laminated outer packaging body. The laminate type battery was prepared by pouring 0.2 g of the above nonaqueous electrolyte solution, allowing the electrode laminate to be vacuum impregnated with the nonaqueous electrolyte solution, and then heat-sealing the opening under reduced pressure to seal the opening by a width of 5 mm.

### (First charge and discharge)

The laminate type battery prepared as described above was charged at a 12-mA constant current corresponding to 5 hour rate (0.2 C) to 4.8 V at 20°C, subjected to a 4.8 V constant-voltage charge for 8 hours in total, and then subjected to a constant-current discharge at 60 mA corresponding to 1 hour rate (1 C) to 3.0 V.

### (Evaluation of Rate Characteristics)

The laminate type battery having completed the first time charge and discharge was charged at 1 C to 4.8 V at 20°C, subjected to a 4.8 V constant-voltage charge for 2.5 hours in total, subjected to a constant-current discharge at 2 C to 3.0 V, and was then again subjected to a constant-current discharge at 0.2 C to 3.0 V. When the total of the discharge capacity at 2 C and the discharge capacity at 0.2 C represents 100%, the percentage (%) of the discharge capacity at 2 C was determined as the rate characteristics.

### (High Temperature Cycle Test)

The laminate type battery having completed the first time charge and discharge was charged at 1 C to 4.8 V, subjected to a 4.8 V constant-voltage charge for 2.5 hours in total, and then subjected to a constant-current discharge at 1 C to 3.0 V. These charge and discharge were defined as one charge and discharge cycle. The charge and discharge cycle was repeated 100 times at 45°C. The ratio of the discharge capacity after 100 cycles to the first discharge capacity was determined as a capacity retention rate (%).

### (Example 2)

A laminate type battery was prepared and evaluated in the same manner as in Example 1 except that the composition of the nonaqueous solvent contained in the nonaqueous electrolyte solution was changed to FE:EC:DMC = 60:20:20 (volume %).

### (Example 3)

A laminate type battery was prepared and evaluated in the same manner as in Example 1 except that LiNi_{0.5}Mn_{1.5}O₄ powder (average particle size (D₅₀): 15 µm, specific surface area: 0.7 m²/g) was used as a positive electrode active material, and the composition of the nonaqueous solvent contained in the nonaqueous electrolyte solution was changed to FE:EC:DMC = 10:20:70 (volume %).

### (Example 4)

A laminate type battery was prepared and evaluated in the same manner as in Example 3 except that the composition of the nonaqueous solvent contained in the nonaqueous electrolyte solution was changed to FE:EC:DMC = 60:20:20 (volume %).

### (Example 5)

A laminate type battery was prepared and evaluated in the same manner as in Example 1 except that LiNi_{0.5}Mn_{1.5}O₄ powder (average particle size (D₅₀): 25 µm, specific surface area: 0.2 m²/g) was used as a positive electrode active material, and the composition of the nonaqueous solvent contained in the nonaqueous electrolyte solution was changed to FE:EC:DMC = 10:20:70 (volume %).

### (Example 6)

A laminate type battery was prepared and evaluated in the same manner as in Example 5 except that the composition of the nonaqueous solvent contained in the nonaqueous electrolyte solution was changed to FE:EC:DMC = 40:20:40 (volume %).

### (Example 7)

A laminate type battery was prepared and evaluated in the same manner as in Example 1 except that LiNi_{0.5}Mn_{1.5}O₄ powder (average particle size (D₅₀): 10 µm, specific surface area: 1.0 m²/g) was used as a positive electrode active material, and the composition of the nonaqueous solvent contained in the nonaqueous electrolyte solution was changed to FE:EC:DMC = 40:20:40 (volume %).

### (Example 8)

A laminate type battery was prepared and evaluated in the same manner as in Example 3 except that the composition of the nonaqueous solvent contained in the nonaqueous electrolyte solution was changed to FE:EC:DMC = 35:20:45 (volume %).

### (Example 9)

A laminate type battery was prepared and evaluated in the same manner as in Example 1 except that LiNi_{0.5}Mn_{1.5}O₄ powder (average particle size (D₅₀): 20 µm, specific surface area: 0.5 m²/g) was used as a positive electrode active material.

### (Comparative Example 1)

A laminate type battery was prepared and evaluated in the same manner as in Example 6 except that LiNi_{0.5}Mn_{1.5}O₄ powder (average particle size (D₅₀): 3 µm, specific surface area: 1.4 m²/g) was used as a positive electrode active material.

### (Comparative Example 2)

A laminate type battery was prepared and evaluated in the same manner as in Example 7 except that the composition of the nonaqueous solvent contained in the nonaqueous electrolyte solution was changed to FE:EC:DMC = 10:20:70 (volume %).

### (Comparative Example 3)

A laminate type battery was prepared and evaluated in the same manner as in Example 7 except that the composition of the nonaqueous solvent contained in the nonaqueous electrolyte solution was changed to FE:EC:DMC = 70:20:10 (volume %).

### (Comparative Example 4)

A laminate type battery was prepared and evaluated in the same manner as in Example 6 except that the composition of the nonaqueous solvent contained in the nonaqueous electrolyte solution was changed to FE:EC:DMC = 50:20:30 (volume %).

### (Comparative example 5)

A laminate type battery was prepared and evaluated in the same manner as in Example 1 except that LiNi_{0.5}Mn_{1.5}O₄ powder (average particle size (D₅₀): 29 µm, specific surface area: 0.15 m²/g) was used as a positive electrode active material, and the composition of the nonaqueous solvent contained in the nonaqueous electrolyte solution was changed to FE:EC:DMC = 25:20:55 (volume %).

### [Table 1]

**[Table 1]**

| | Positive electrode active material | | Nonaqueous solvent | | | | Parameter | | | | | Evaluation results | |
|---|---|---|---|---|---|---|---|---|---|---|---|---|---|
| | D₅₀ (µm) | BET (m²/g) | FE (vol. %) | EC (vol. %) | DMC (vol. %) | EC:DMC | A | B | 2A+B | C | 200C-3B | Rate characteristics (%) | Capacity retention rate(%) |
| Example 1 | 5 | 1.2 | 30 | 20 | 50 | 1:2.5 | 5 | 30 | 40 | 1.2 | 150 | 74 | 66 |
| Example 2 | 5 | 1.2 | 60 | 20 | 20 | 1:1 | 5 | 60 | 70 | 1.2 | 60 | 71 | 69 |
| Example 3 | 15 | 0.7 | 10 | 20 | 70 | 1:3.5 | 15 | 10 | 40 | 0.7 | 110 | 74 | 69 |
| Example 4 | 15 | 0.7 | 60 | 20 | 20 | 1:1 | 15 | 60 | 90 | 0.7 | -40 | 69 | 75 |
| Example 5 | 25 | 0.2 | 10 | 20 | 70 | 1:3.5 | 25 | 10 | 60 | 0.2 | 10 | 70 | 70 |
| Example 6 | 25 | 0.2 | 40 | 20 | 40 | 1:2 | 25 | 40 | 90 | 0.2 | -80 | 65 | 78 |
| Example 7 | 10 | 1.0 | 40 | 20 | 40 | 1:2 | 10 | 40 | 60 | 1.0 | 80 | 70 | 75 |
| Example 8 | 15 | 0.7 | 35 | 20 | 45 | 1:2.25 | 15 | 35 | 65 | 0.7 | 35 | 70 | 75 |
| Example 9 | 20 | 0.5 | 30 | 20 | 50 | 1:2.5 | 20 | 30 | 70 | 0.5 | 10 | 68 | 77 |
| Comparative Example 1 | 3 | 1.4 | 40 | 20 | 40 | 1:2 | 3 | 40 | 46 | 1.4 | 160 | 76 | 36 |
| Comparative Example 2 | 10 | 1.0 | 10 | 20 | 70 | 1:3.5 | 10 | 10 | 30 | 1.0 | 170 | 77 | 39 |
| Comparative Example 3 | 10 | 1.0 | 70 | 20 | 10 | 1:0.5 | 10 | 70 | 90 | 1.0 | -10 | 40 | 70 |
| Comparative Example 4 | 25 | 0.2 | 50 | 20 | 30 | 1:1.5 | 25 | 50 | 100 | 0.2 | -110 | 42 | 74 |
| Comparative Example 5 | 29 | 0.15 | 25 | 20 | 55 | 1:2.75 | 29 | 25 | 83 | 0.15 | -45 | 40 | 72 |

The rate characteristics of the laminate type batteries obtained in Examples 1 to 9 were as good as 65 to 74%, and the capacity retention rate was also as good as 66 to 78%. On the other hand, although the rate characteristics of the laminate type batteries obtained in Comparative Examples 1 to 2 were good, the capacity retention rate was as low as 40% or less. The capacity retention rate of the laminate type batteries obtained in Comparative Examples 3 to 5 was good, but the rate characteristics were as low as about 40%.

As shown in Figure 1 in which the requirements of Examples 1 to 9 and Comparative Examples 1 to 5 are plotted on the A-B coordinate plane, the requirements of Examples 1 to 6 are located at the apexes of the hexagon formed by the formulae (a) to (c), and the requirements of Examples 7 to 9 are located in the inner part of the hexagon; on the other hand, the requirements of Comparative Examples 1 to 5 are located in the outside of the hexagon. Further, as shown in Figure 2 in which the requirements of Examples 1 to 9 and Comparative Examples 1 to 5 are plotted on the C-B coordinate plane, the requirements of Examples 1 to 9 are located at the apexes or in the inner part of the hexagon formed by the formulae (b), (d), and (e); on the other hand, the requirements of Comparative Examples 1 to 5 are located in the outside of the hexagon. Therefore, it is found that when the average particle size or the specific surface area of the positive electrode active material and the volume concentration of the fluorinated ether in the nonaqueous electrolyte solution satisfy the requirement [1] or the requirement [2], respectively, the resulting lithium ion secondary battery can be excellent in both rate characteristics and high temperature cycle characteristics.

### (Example 10)

A laminate type battery was prepared and evaluated in the same manner as in Example 3 except that the composition of the nonaqueous solvent contained in the nonaqueous electrolyte solution was changed to FE:EC:DMC = 30:10:60 (volume %).

### (Example 11)

A laminate type battery was prepared and evaluated in the same manner as in Example 3 except that the composition of the nonaqueous solvent contained in the nonaqueous electrolyte solution was changed to FE:EC:DMC = 30:20:50 (volume %).

### (Example 12)

A laminate type battery was prepared and evaluated in the same manner as in Example 3 except that the composition of the nonaqueous solvent contained in the nonaqueous electrolyte solution was changed to FE:EC:DMC = 30:35:35 (volume %).

### (Example 13)

A laminate type battery was prepared and evaluated in the same manner as in Example 3 except that the composition of the nonaqueous solvent contained in the nonaqueous electrolyte solution was changed to FE:EC:DMC = 30:45:25 (volume %).

### (Example 14)

A laminate type battery was prepared and evaluated in the same manner as in Example 3 except that the composition of the nonaqueous solvent contained in the nonaqueous electrolyte solution was changed to FE:EC:DMC = 30:7:63 (volume %).

### (Example 15)

A laminate type battery was prepared and evaluated in the same manner as in Example 3 except that the composition of the nonaqueous solvent contained in the nonaqueous electrolyte solution was changed to FE:EC:DMC = 30:50:20 (volume %).

### [Table 2]

**[Table 2]**

| | Nonaqueous solvent | | | | Parameter | | | | | Evaluation results | |
|---|---|---|---|---|---|---|---|---|---|---|---|
| | FE (vol. %) | EC (vol. %) | DMC (vol. %) | EC:DMC | A | B | 2A+B | C | 200C-3B | Rate characteristics (%) | Capacity retention rate (%) |
| Example 10 | 30 | 10 | 60 | 1:6 | 15 | 30 | 60 | 0.7 | 50 | 72 | 74 |
| Example 11 | 30 | 20 | 50 | 1:2.5 | 15 | 30 | 60 | 0.7 | 50 | 70 | 72 |
| Example 12 | 30 | 35 | 35 | 1:1 | 15 | 30 | 60 | 0.7 | 50 | 67 | 76 |
| Example 13 | 30 | 45 | 25 | 1:0.56 | 15 | 30 | 60 | 0.7 | 50 | 66 | 76 |
| Example 14 | 30 | 7 | 63 | 1:9 | 15 | 30 | 60 | 0.7 | 50 | 73 | 65 |
| Example 15 | 30 | 50 | 20 | 1:0.4 | 15 | 30 | 60 | 0.7 | 50 | 62 | 67 |

As shown in Table 2, laminate type batteries having good rate characteristics and high temperature cycle characteristics were obtained also in Examples 10 to 15 in which the ratio of EC to DMC was changed. Laminate type batteries having excellent rate characteristics and high temperature cycle characteristics were obtained in Examples 10 to 13 in which the ratio of EC to DMC was in the range of 1:0.56 to 1:6.

### (Example 16)

A laminate type battery was prepared and evaluated in the same manner as in Example 10 except that DEC was used instead of DMC as a linear carbonate.

### (Example 17)

A laminate type battery was prepared and evaluated in the same manner as in Example 10 except that EMC was used instead of DMC as a linear carbonate.

### (Example 18)

A laminate type battery was prepared and evaluated in the same manner as in Example 10 except that CF₃CH₂OCH₃ was used as a fluorinated ether (FE).

### (Example 19)

A laminate type battery was prepared and evaluated in the same manner as in Example 10 except that CF₃(CF₂)₄OC₂H₅ was used as a fluorinated ether (FE).

### (Example 20)

A laminate type battery was prepared and evaluated in the same manner as in Example 10 except that F(CF₂)₈OCH₃ was used as a fluorinated ether (FE).

### [Table 3]

**[Table 3]**

| | Nonaqueous solvent | | Parameter | | | | | Evaluation results | |
|---|---|---|---|---|---|---|---|---|---|
| | Type of fluorinated ether (FE) | Type of linear carbonate | A | B | 2A+B | C | 200C-3B | Rate characteristics (%) | Capacity retention rate(%) |
| Example 10 | H(CF₂)₂CH₂O(CF₂)₂H | DMC | 15 | 30 | 60 | 0.7 | 50 | 72 | 74 |
| Example 16 | H(CF₂)₂CH₂O(CF₂)₂H | DEC | 15 | 30 | 60 | 0.7 | 50 | 69 | 69 |
| Example 17 | H(CF₂)₂CH₂O(CF₂)₂H | EMC | 15 | 30 | 60 | 0.7 | 50 | 71 | 70 |
| Example 18 | CF₃CH₂OCH₃ | DMC | 15 | 30 | 60 | 0.7 | 50 | 69 | 70 |
| Example 19 | CF₃(CF₂)₄OC₂H₅ | DMC | 15 | 30 | 60 | 0.7 | 50 | 67 | 71 |
| Example 20 | F(CF₂)₈OCH₃ | DMC | 15 | 30 | 60 | 0.7 | 50 | 65 | 68 |

As shown in Table 3, laminate type batteries having good rate characteristics and high temperature cycle characteristics were obtained also in Examples 16 to 20 in which the type of fluorinated ether and linear carbonate was changed.

### (Example 21)

A laminate type battery was prepared and evaluated in the same manner as in Example 11 except that LiNi_{0.5}Mn_{1.35}Ti_{0.15}O₄ powder (average particle size (D₅₀): 15 µm, specific surface area: 0.5 m²/g) was used as a positive electrode active material.

### (Example 22)

A laminate type battery was prepared and evaluated in the same manner as in Example 11 except that LiNi_{0.5}Min_{1.45}Al_{0.05}O_{3.95}F_{0.05} powder (average particle size (D₅₀): 15 µm, specific surface area: 0.5 m²/g) was used as a positive electrode active material.

### (Example 23)

A laminate type battery was prepared and evaluated in the same manner as in Example 11 except that LiNi_{0.5}Mn_{1.49}B_{0.01}O₄ powder (average particle size (D₅₀): 13 µm, specific surface area: 0.6 m²/g) was used as a positive electrode active material.

### (Example 24)

A laminate type battery was prepared and evaluated in the same manner as in Example 11 except that LiNi_{0.49}Mn_{1.49}Mg_{0.01}O₄ powder (average particle size (D₅₀): 16 µm, specific surface area: 0.5 m²/g) was used as a positive electrode active material.

### (Example 25)

A laminate type battery was prepared and evaluated in the same manner as in Example 11 except that LiNi_{0.5}Mn_{1.45}Si_{0.05}O₄ powder (average particle size (D₅₀): 17 µm, specific surface area: 0.4 m²/g) was used as a positive electrode active material.

### (Example 26)

A laminate type battery was prepared and evaluated in the same manner as in Example 11 except that LiNi_{0.3}Co_{0.4}Mn_{1.3}O₄ powder (average particle size (D₅₀): 15 µm, specific surface area: 0.5 m²/g) was used as a positive electrode active material.

### (Example 27)

A laminate type battery was prepared and evaluated in the same manner as in Example 11 except that LiCr_{0.8}Mn_{1.2}O₄ powder (average particle size (D₅₀): 13 µm, specific surface area: 0.6 m²/g) was used as a positive electrode active material.

### (Example 28)

A laminate type battery was prepared and evaluated in the same manner as in Example 11 except that LiNi_{0.4}Fe_{0.2}Mn_{1.4}O₄ powder (average particle size (D₅₀): 13 µm, specific surface area: 0.5 m²/g) was used as a positive electrode active material.

### (Example 29)

A laminate type battery was prepared and evaluated in the same manner as in Example 11 except that LiNi_{0.45}Cu_{0.05}Mn_{1.5}O₄ powder (average particle size (D₅₀): 15 µm, specific surface area: 0.5 m²/g) was used as a positive electrode active material.

### [Table 4]

**[Table 4]**

| | Positive electrode active material | Parameter | | | | | Evaluation results | |
|---|---|---|---|---|---|---|---|---|
| | Type | A | B | 2A+B | C | 200C-3B | Rate characteristics (%) | Capacity retention rate(%) |
| Example 11 | LiNi_{0.5}Mn_{1.5}O₄ | 15 | 30 | 60 | 0.7 | 50 | 70 | 72 |
| Example 21 | LiNi_{0.5}Mn_{1.35}Ti_{0.15}O₄ | 15 | 30 | 60 | 0.5 | 10 | 71 | 74 |
| Example 22 | LiNi_{0.5}Mn_{1.45}Al_{0.05}O_{3.95}F_{0.05} | 15 | 30 | 60 | 0.5 | 10 | 70 | 72 |
| Example 23 | LiNi_{0.5}Mn_{1.49}B_{0.01}O₄ | 13 | 30 | 56 | 0.6 | 30 | 70 | 72 |
| Example 24 | LiNi_{0.49}Mn_{1.49}Mg_{0.01}O₄ | 16 | 30 | 62 | 0.5 | 10 | 72 | 75 |
| Example 25 | LiNi_{0.5}Mn_{1.45}Si_{0.05}O₄ | 17 | 30 | 64 | 0.4 | -10 | 71 | 71 |
| Example 26 | LiNi_{0.3}Co_{0.4}Mn_{1.3}O₄ | 15 | 30 | 60 | 0.5 | 10 | 68 | 71 |
| Example 27 | LiCr_{0.8}Mn_{1.2}O₄ | 13 | 30 | 56 | 0.6 | 30 | 69 | 69 |
| Example 28 | LiNi_{0.4}Fe_{0.2}Mn_{1.4}O₄ | 13 | 30 | 56 | 0.5 | 10 | 69 | 71 |
| Example 29 | LiNi_{0.45}CLi_{0.05}Mn_{1.5}O₄ | 15 | 30 | 60 | 0.5 | 10 | 70 | 69 |

As shown in Table 4, laminate type batteries having good rate characteristics and high temperature cycle characteristics were obtained also in Examples 21 to 29 in which the type of positive electrode active material was changed.

This application claims the priority based on Japanese Patent Application No. 2010-144957 filed on June 25, 2010.

## Claims

1. A lithium ion secondary battery comprising a positive electrode active material capable of absorbing and desorbing lithium, a negative electrode active material capable of absorbing and desorbing lithium, and a nonaqueous electrolyte solution containing a fluorinated ether represented by the following formula (1):
R₁-O-R₂ (1),
wherein in the formula (1), R₁ and R₂ are each independently selected from a fluorinated alkyl group having 1 to 9 carbon atoms or an alkyl group having 1 to 9 carbon atoms; at least one of R₁ and R₂ is a fluorinated alkyl group having 1 to 9 carbon atoms; and the sum of number of the carbon atoms of R₁ and R₂ is 10 or less,
**characterized in**
the lithium ion secondary battery satisfies the following formulae (a) to (c):
(a) 5 ≤ A ≤ 25,
(b) 10 ≤ B ≤ 60, and
(c) 40 ≤ 2A + B ≤ 90,
wherein A, expressed in µm, represents an average particle size of the positive electrode active material; and B, expressed in vol.%, represents a volume concentration of the fluorinated ether in the nonaqueous electrolyte solution.

2. A lithium ion secondary battery comprising a negative electrode active material capable of absorbing and desorbing lithium, a positive electrode active material capable of absorbing and desorbing lithium, and a nonaqueous electrolyte solution containing a fluorinated ether represented by the following formula (1):
R₁-O-R₂ (1),
wherein in the formula (1), R₁ and R₂ are each independently selected from a fluorinated alkyl group having 1 to 9 carbon atoms or an alkyl group having 1 to 9 carbon atoms; at least one of R₁ and R₂ is a fluorinated alkyl group having 1 to 9 carbon atoms; and the sum of number of the carbon atoms of R₁ and R₂ is 10 or less,
**characterized in that**
the lithium ion secondary battery satisfies the following formulae (b), (d), and (e):
(b) 10 ≤ B ≤ 60,
(d) 0.2 ≤ C ≤ 1.2, and
(e) -80 ≤ 200C - 3B ≤ 150,
wherein B, expressed in vol.%, represents a volume concentration of the fluorinated ether in the nonaqueous electrolyte solution; and C, expressed in m²/g, represents a specific surface area of the positive electrode active material.

3. The lithium ion secondary battery according to claim 1 or 2,
wherein the nonaqueous electrolyte solution contains at least one of a cyclic carbonate and a linear carbonate as a component other than the fluorinated ether.

4. The lithium ion secondary battery according to claim 3,
wherein the nonaqueous electrolyte solution contains a cyclic carbonate and a linear carbonate as a component other than the fluorinated ether, and
a volume ratio of the cyclic carbonate to the linear carbonate is 1:0.56 to 1:6.

5. The lithium ion secondary battery according to any one of claims 1 to 4,
wherein the positive electrode active material contains a lithium manganese composite oxide represented by the following formula (2):
Liₐ(MₓMn_{2-x-y}Y_{y})(O_{4-w}Z_{w}) (2)
wherein in the formula (2), 0.5 ≤ x ≤ 1.2, 0 ≤ y, x + y < 2, 0 ≤ a ≤ 1.2, and 0 ≤ w ≤ 1; M is at least one selected from the group consisting of Co, Ni, Fe, Cr, and Cu; Y is at least one selected from the group consisting of Li, B, Na, Mg, Al, Ti, Si, K, and Ca; and Z is at least one of F and Cl.

6. The lithium ion secondary battery according to any one of claims 1 to 5,
wherein, in the formula (1), number of carbon atoms of one of R₁ and R₂ is 3 or more and 8 or less, and number of carbon atoms of the other of R₁ and R₂ is 1 or more and 2 or less.

## Patentansprüche

1. Lithiumionen-Sekundärbatterie mit einem aktiven Material für eine positive Elektrode, das in der Lage ist, Lithium zu absorbieren und zu desorbieren, einem aktiven Material für eine negative Elektrode, das in der Lage ist, Lithium zu absorbieren und zu desorbieren, und einer nicht-wässrigen Elektrolytlösung, die einen fluorierten Ether enthält, der durch die folgende Formel (1) dargestellt ist:
R₁-O-R₂ (1),
wobei in der Formel (1) R₁ und R₂ jeweils unabhängig ausgewählt sind aus einer fluorierten Alkylgruppe mit 1 bis 9 Kohlenstoffatomen oder einer Alkylgruppe mit 1 bis 9 Kohlenstoffatomen, wobei mindestens eine der Komponenten R₁ und R₂ eine fluorierte Alkylgruppe mit 1 bis 9 Kohlenstoffatomen ist, und wobei die Summe der Anzahl der Kohlenstoffatome von R₁ und R₂ 10 oder weniger beträgt;
**dadurch gekennzeichnet, dass**
die Lithiumionen-Sekundärbatterie die folgenden Bedingungen (a) bis (c) erfüllt:
(a) 5 ≤ A ≤ 25,
(b) 10 ≤ B ≤ 60, und
(c) 40 ≤ 2A + B ≤ 90,
wobei A, ausgedrückt in µm, eine mittlere Partikelgröße des aktiven Materials für die positive Elektrode darstellt, und B, ausgedrückt in Vol.-%, eine Volumenkonzentration des fluorierten Ethers in der nicht-wässrigen Elektrolytlösung darstellt.

2. Lithiumionen-Sekundärbatterie mit einem aktiven Material für eine negative Elektrode, das in der Lage ist, Lithium zu absorbieren und zu desorbieren, einem aktiven Material für eine positive Elektrode, das in der Lage ist, Lithium zu absorbieren und zu desorbieren, und einer nicht-wässrigen Elektrolytlösung, die einen fluorierten Ether enthält, der durch die folgenden Formel (1) dargestellt ist:
R₁-O-R₂ (1),
wobei in der Formel (1) R₁ und R₂ jeweils unabhängig ausgewählt sind aus einer fluorierten Alkylgruppe mit 1 bis 9 Kohlenstoffatomen oder einer Alkylgruppe mit 1 bis 9 Kohlenstoffatomen, wobei mindestens eine der Komponenten R₁ und R₂ eine fluorierte Alkylgruppe mit 1 bis 9 Kohlenstoffatomen ist, und wobei die Summe der Anzahl der Kohlenstoffatome von R₁ und R₂ 10 oder weniger beträgt;
**dadurch gekennzeichnet, dass**
die Lithiumionen-Sekundärbatterie die folgenden Bedingungen (b), (d) und (e) erfüllt:
(b) 10 ≤ B ≤ 60,
(d) 0,2 ≤ C ≤ 1,2, und
(e) -80 ≤ 200C - 3B ≤ 150,
wobei B, ausgedrückt in Vol.%, eine Volumenkonzentration des fluorierten Ethers in der nicht-wässrigen Elektrolytlösung darstellt, und C, ausgedrückt in m²/g, eine spezifische Oberfläche des aktiven Materials für die positive Elektrode darstellt.

3. Lithiumionen-Sekundärbatterie nach Anspruch 1 oder 2,
wobei die nicht-wässrige Elektrolytlösung mindestens eine Komponente unter einem zyklischen Carbonat und einem linearen Carbonat als eine von dem fluorierten Ether verschiedene Komponente enthält.

4. Lithiumionen-Sekundärbatterie nach Anspruch 3,
wobei die nicht-wässrige Elektrolytlösung ein zyklisches Carbonat und ein lineares Carbonat als eine von dem fluorierten Ether verschiedene Komponente enthält, und
wobei ein Volumenverhältnis des zyklischen Carbonats zum linearen Carbonat 1:0,56 bis 1:6 beträgt.

5. Lithium-Ionen-Sekundärbatterie nach einem der Ansprüche 1 bis 4,
wobei das aktive Material für die positive Elektrode ein Lithium-Mangan-Verbundoxid enthält, das durch die folgende Formel (2) dargestellt ist:
Liₐ(MₓMn_{2-x-y}Y_{y})(O_{4-w}Z_{w}) (2)
wobei in der Formel (2) 0,5 ≤ x ≤ 1,2, 0 ≤ y, x + y < 2, 0 ≤ a ≤ 1,2 und 0 ≤ w ≤ 1 sind, M mindestens ein Element ist, das ausgewählt ist aus der Gruppe bestehend aus Co, Ni, Fe, Cr und Cu, Y mindestens ein Element ist, das ausgewählt ist aus der Gruppe bestehend aus Li, B, Na, Mg, Al, Ti, Si, K und Ca, und Z mindestens ein Element unter F und C1 ist.

6. Lithium-Ionen-Sekundärbatterie nach einem der Ansprüche 1 bis 5,
wobei in der Formel (1) die Anzahl der Kohlenstoffatome einer Komponente unter R₁ und R₂ 3 oder mehr und 8 oder weniger beträgt, und wobei die Anzahl der Kohlenstoffatome der anderen Komponente unter R₁ und R₂ 1 oder mehr und 2 oder weniger beträgt.

## Revendications

1. Batterie secondaire au lithium-ion comprenant un matériau actif d'électrode positive capable d'absorber et de désorber le lithium, un matériau actif d'électrode négative capable d'absorber et de désorber le lithium, et une solution d'électrolyte non aqueuse contenant un éther fluoré représenté par la formule (1) suivante :
R₁-O-R₂ (1),
dans laquelle, dans la formule (1), R₁ et R₂ sont sélectionnés chacun indépendamment parmi un groupe alkyle fluoré ayant 1 à 9 atomes de carbone ou un groupe alkyle ayant 1 à 9 atomes de carbone ; au moins l'un parmi R₁ et R₂ est un groupe alkyle fluoré ayant 1 à 9 atomes de carbone ; et la somme du nombre d'atomes de carbone de R₁ et R₂ est 10 ou moins,
**caractérisée en ce que** la batterie secondaire au lithium-ion satisfait les formules (a) à (c) suivantes :
(a) 5 ≤ A≤ 25,
(b) 10≤ B ≤ 60, et
(c) 40 ≤ 2A + B ≤ 90,
dans lesquelles A, exprimé en µm, représente une taille particulaire moyenne du matériau actif d'électrode positive ; et B, exprimé en % en volume, représente une concentration en volume de l'éther fluoré dans la solution d'électrolyte non aqueuse.

2. Batterie secondaire au lithium-ion comprenant un matériau actif d'électrode négative capable d'absorber et de désorber le lithium, un matériau actif d'électrode positive capable d'absorber et de désorber le lithium, et une solution d'électrolyte non aqueuse contenant un éther fluoré représenté par la formule (1) suivante :
R₁-O-R₂ (1),
dans laquelle, dans la formule (1), R₁ et R₂ sont sélectionnés chacun indépendamment parmi un groupe alkyle fluoré ayant 1 à 9 atomes de carbone ou un groupe alkyle ayant 1 à 9 atomes de carbone ; au moins l'un parmi R₁ et R₂ est un groupe alkyle fluoré ayant 1 à 9 atomes de carbone ; et la somme du nombre d'atomes de carbone de R₁ et R₂ est 10 ou moins,
**caractérisée en ce que** la batterie secondaire au lithium-ion satisfait les formules (b), (d) et (e) suivantes :
(b) 10 ≤ B ≤ 60,
(d) 0,2 ≤ C ≤ 1,2, et
(e) -80 ≤ 200C - 3B ≤ 150,
dans lesquelles B, exprimé en % en volume, représente une concentration en volume de l'éther fluoré dans la solution d'électrolyte non aqueuse ; et C, exprimé en m²/g, représente une surface spécifique du matériau actif d'électrode positive.

3. Batterie secondaire au lithium-ion selon la revendication 1 ou 2,
dans laquelle la solution d'électrolyte non aqueuse contient au moins l'un parmi un carbonate cyclique et un carbonate linéaire en tant que composant autre que l'éther fluoré.

4. Batterie secondaire au lithium-ion selon la revendication 3,
dans laquelle la solution d'électrolyte non aqueuse contient un carbonate cyclique et un carbonate linéaire en tant que composant autre que l'éther fluoré, et
un rapport en volume entre le carbonate cyclique et le carbonate linéaire est de 1: 0,56 à 1: 6.

5. Batterie secondaire au lithium-ion selon l'une quelconque des revendications 1 à 4,
dans laquelle le matériau actif d'électrode positive contient un oxyde composite de lithium et de manganèse représenté par la formule (2) suivante :
Liₐ(MₓMn_{2-x-y}Y_{y})(O_{4-w}Z_{w}) (2)
dans laquelle, dans la formule (2), 0,5 ≤ x ≤ 1,2, 0 ≤ y, x + y < 2, 0 ≤ a ≤ 1,2, et 0 ≤ w ≤ 1 ; M est au moins l'un sélectionné dans le groupe constitué de Co, Ni, Fe, Cr, et Cu ; Y est au moins l'un sélectionné dans le groupe constitué de Li, B, Na, Mg, Al, Ti, Si, K, et Ca ; et Z est au moins l'un parmi F et Cl.

6. Batterie secondaire au lithium-ion selon l'une quelconque des revendications 1 à 5,
dans laquelle, dans la formule (1), le nombre d'atomes de carbone de l'un parmi R₁ et R₂ est 3 ou plus et 8 ou moins, et le nombre d'atomes de carbone de l'autre parmi R₁ et R₂ est 1 ou plus et 2 ou moins.
